# EUROPÄISCHE PATENTSCHRIFT

(11) **EP 3 466 729 B1**
(45) Veröffentlichungstag und Bekanntmachung des Hinweises auf die Patenterteilung: **01.04.2020**
(21) Anmeldenummer: 18204532.8
(22) Anmeldetag: 22.11.2017
(51) Int. Cl.: B60D 1/173, B60D 1/48, B60D 1/00

(54) **TRANSPORTANHÄNGERVERBUND UND TRANSPORTANHÄNGERZUG MIT MINDESTENS ZWEI SOLCHEN TRANSPORTANHÄNGERVERBUNDEN**
TRANSPORT TRAILER COMPOSITE AND TRANSPORT TRAILER TRAIN COMPRISING AT LEAST TWO SUCH TRANSPORT TRAILER COMPOSITES
RACCORDEMENT DE REMORQUE DE TRANSPORT ET TRAIN DE REMORQUE DE TRANSPORT DOTÉS D'AU MOINS DEUX TELS RACCORDEMENTS DE REMORQUE DE TRANSPORT

(30) Priorität: 29.11.2016 DE 102016123005
(43) Veröffentlichungstag der Anmeldung: 10.04.2019
(62) Teilanmeldung aus: 17203105.6
(73) Patentinhaber: LKE Gesellschaft für Logistik- und Kommunikations- Equipment mbH, 45768 Marl (DE)
(72) Erfinder: EILDERS, Joachim, 45529 Hattingen (DE)
(74) Vertreter: Rausch Wanischeck-Bergmann Brinkmann

(56) Entgegenhaltungen:
- US-A- 1 020 393
- US-A- 1 336 665
- US-A- 1 557 173

## Beschreibung

Die Erfindung betrifft einen Transportanhängerverbund mit mindestens zwei miteinander gekoppelten Transportanhängern, deren jeweiliges Fahrwerk mindestens zwei Laufrollen aufweist, die um eine gemeinsame Drehachse drehbar sind, wobei das jeweilige Fahrwerk in Fahrtrichtung betrachtet an seiner vorderen Seite ein vorderes Verbindungselement und an seiner hinteren Seite ein hinteres Verbindungselement aufweist, und wobei das vordere Verbindungselement und das hintere Verbindungselement zur gelenkigen Anbindung einer zwei der Transportanhänger miteinander verbindenden Koppelstange ausgeführt sind. Weiter betrifft die Erfindung einen Transportanhängerzug mit mindestens zwei solchen Transportanhängerverbunden.

In vielen Bereichen der Intralogistik werden zum Transport von Gütern, insbesondere zum Transport von Montageteilen in der Produktion, Transportanhängerverbunde verwendet. Dazu werden mehrere Transportanhänger in einem Schleppverbund miteinander verbunden. Die miteinander verbundenen Anhänger werden üblicherweise mittels eines Schleppfahrzeugs verfahren. Einzelne oder wenige Transportanhänger, z.B. zwei oder drei miteinander verbundene Anhänger, werden häufig auch im Handverzug verfahren. US 1 336 665 A offenbart einen Transportanhängerverbund gemäß dem Oberbegriff des Anspruchs 1.

Transportanhängerverbunde der voranstehend genannten Art werden auch als Routenzug, Transportzug oder Schleppzug bezeichnet. Dabei werden in der Praxis aus Kostengründen hauptsächlich als Einachsanhänger ausgeführte Transportanhänger verwendet. Das Fahrverhalten von Einachsanhängern hängt im Wesentlichen von der Fahrwerksgeometrie der festen gemeinsamen Drehachse der Laufrollen und der relativen Lage der Anbindungspunkte, d.h. des vom Schleppfahrzeug oder von einem anderen Transportanhänger gezogenen Anbindungspunktes und des einen nachfolgenden Transportwagen ziehenden Anbindungspunktes. Die beiden Laufrollen des Einachsanhängers sind üblicherweise als Bockrollen ausgeführt. Lenkrollen, die zur Abstützung an dem Anhänger angeordnet sind, haben kaum einen Einfluss auf das Fahrverhalten des Einachsanhängers. Im Kontext der vorliegenden Erfindung werden daher auch Transportanhänger mit einem sogenannten Rautenfahrwerk, d.h. einem Fahrwerk mit zwei eine gemeinsame Drehachse definierenden Laufrollen (z.B. Bockrollen) und einer vorderen und einer hinteren Lenkrolle, sowie einem Sechsradfahrwerk, d.h. einem Fahrwerk mit zwei eine gemeinsame Drehachse definierenden Laufrollen (z.B. Bockrollen) und zwei vorderen und zwei hinteren Lenkrollen als Einachsanhänger angesehen.

Für die Einsetzbarkeit eines Transportanhängerverbundes (Routenzuges) und die mögliche Anzahl von Transportanhängern, die in einem Zug gefahren werden können, sind häufig der Platzbedarf in Form vorhandener Breiten der Verkehrsweg und das Fahrverhalten des Transportanhängerverbundes entscheidend.

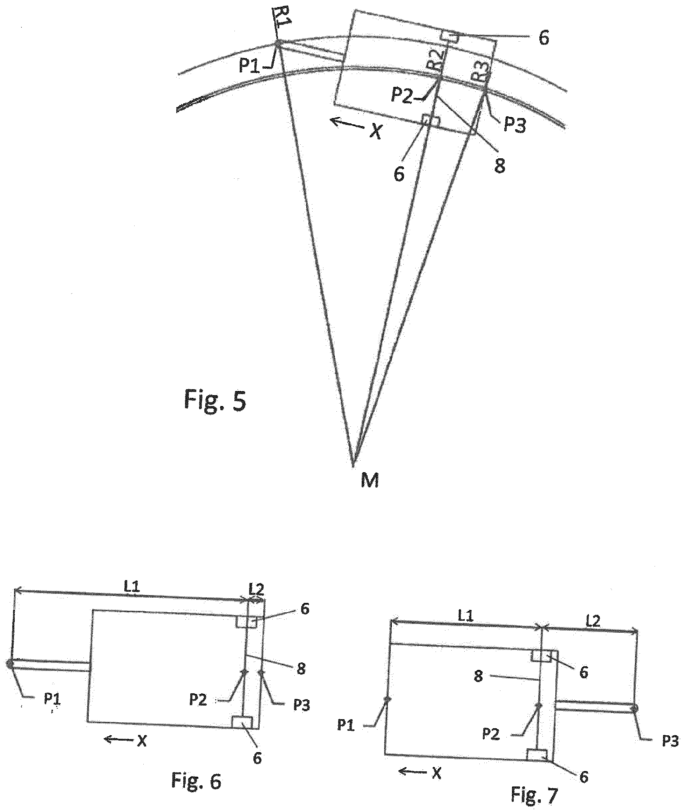

Das Fahrverhalten, insbesondere die Spurtreue von Einachsanhängern hängt maßgeblich von der Position von drei Punkten ab, und zwar von der Position gezogenen Punktes (P1), der Position des Achsmittelpunktes (P2) der festen gemeinsamen Drehachse der beiden Laufrollen und der Position des ziehenden Punktes (P3) (vgl. Fig. 5). Wird ein Einachsanhänger über den Punkt P1 mit dem Radius R1 gezogen, richtet der Anhänger sich so aus, dass seine Mittelachse, d.h. die Verbindungslinie der Punkte P1- P3, senkrecht auf der Verbindungslinie zwischen dem Achsmittelpunkt P2 der Drehachse und dem Kreismittelpunkt M steht. Mit X ist die Fahrtrichtung bezeichnet.

Somit ergeben sich Kreisbewegungen um den Mittelpunkt M des gezogenen Punktes P1 mit R1, des Achsmittelpunktes P2 mit R2 und des ziehenden Punktes P3 mit R3. Da der Punkt P3 des in Fig. 5 schematisch dargestellten Transportanhängers der Punkt ist, der wiederum den nachfolgenden Transportanhänger zieht, ergibt sich eine theoretische Spurabweichung eines Anhängers von R1-R3. Es addieren sich die Spurabweichungen aller in einem Zugverbund (Routenzug) gezogenen Anhänger zu einer Gesamtspurabweichung Rn des Zugverbundes.

Es existieren unterschiedliche Ausführungen von Einachsanhängern, bei denen versucht wurde, die Spurabweichung zu minimieren. In den Figuren 6 und 7 sind zwei solche Ausführungen von Einachsanhängern skizziert.

Optimal für die Spurtreue wäre es, wenn die Verbindungslinien zwischen gezogenem Punkt P1, Achsmittelpunkt P2 und ziehendem Punkt P3 gleich groß sind, also wenn L1 = L2 ist. Dies führt jedoch im realen Betrieb dazu, dass äußere Störeinflüsse, die die Transportanhänger bei Geradeausfahrt aus der Spur bringen, zu einem Aufschaukeln des Transportanhängerverbundes führen. Die Transportanhänger beginnen dabei, in Schlangenlinien zu fahren, was in der Regel nur durch Anhalten des Zugverbundes und Neuausrichten der Transportaushänger korrigiert werden kann. Um ein Aufschaukeln und Schlangenlinienfahren zu verhindern, wird der ziehende Hebel L1 länger bemessen als der gezogene Hebel L2. In diesem Fall ergibt sich jedoch - wie oben erläutert - in einem aus mehreren einachsigen Transportanhängern zusammengestellten Zugverbund bei jedem nachfolgenden einachsigen Transportanhänger eine Spurabweichung.

Um solche Spurabweichungen zu minimieren und ein nahezu spurtreues Nachlaufverhalten zu erreichen, werden relativ aufwendige Fahrwerkskonstruktionen wie beispielsweise doppelte Achsschenkel- oder Drehschemel-Lenkungen verwendet. Diese laufen zwar fast ohne Spurabweichung, sind jedoch aufgrund ihrer aufwendigen Konstruktion kostenintensiv. Zudem weisen diese Konstruktionen deutliche Nachteile beim Handverzug auf, der neben dem Verzug im Schleppverbund über längere Strecken in der Industrie auf kurzen Strecken angewandt wird.

Aus dem Stand der Technik ist ferner gemäß der DE 10 2014 004 318 A1 ein Routenzug mit mindestens einem Anhänger bekannt, wobei mindestens eine Verbindung zwischen einem Zugfahrzeug und einem Anhänger oder eine Verbindung zwischen zwei Anhängern vorgesehen ist, die aus zwei sich kreuzenden Lenkern besteht. Von Vorteil dieser Ausgestaltung ist, dass im Fahrbetrieb auftretende Kippmomente auf ein vorausfahrendes bzw. nachfolgendes Fahrzeug übertragen werden kann. Denn wenn der Routenzug in eine Kurve eingelenkt wird, verlagert sich der Kreuzpunkt der beiden Lenker aus der Mitte der Querausdehnung des Routenzugs in Richtung des kurveninneren Randes zu den hier liegenden Gelenkpunkten der Lenker.

Aus der US 4,949,987 ist eine Kupplung zwischen einem Zugfahrzeug und einem Anhänger bekannt, die als Viergelenk-Anordnung über einen Hauptarm und einen dazu beabstandeten Lenkarm verfügt. Dabei ist die Länge des Hauptarms nicht größer als etwa das 1,5-fache der Länge des Lenkarms. Der hintere Drehpunkt des Lenkarms ist seitlich und vorwärts von dem hinteren Drehpunkt des Hauptarms versetzt ausgebildet, so dass der seitliche Versatz größer als der Vorwärtsversatz ist. Im Ergebnis dieser Ausgestaltung ist die Spurabweichung des Anhängers für bestimmte Manövrier- und Fahrsituationen verringert.

Die EP 0 126 435 A1 offenbart eine Vorrichtung zum Verbinden zweier Fahrzeuge, die zwei sich kreuzende Verbindungsbänder aufweist. Diese Verbindungsbänder sind am Kreuzungspunkt durch parallel angeordnete Führungsplatten frei verschieblich verbunden.

Die DE 38 01 746 A1 offenbart eine Anhängevorrichtung, die über ein scherenartiges Gelenksystem verfügt, das aus gekröpften Diagonalstreben gebildet ist. Diese Ausgestaltung ermöglicht eine Verbindung vom Zugfahrzeug zum Anhänger ohne eine Deichsel.

Die US 1,557,173 offenbart eine Kupplungseinrichtung für einen Anhänger, die über eine Kupplungsstange mit Ausnehmungen verfügt. Durch diese Ausnehmungen hindurch sind gelenkig miteinander gekoppelte Querstreben geführt, die eine Lenkbewegungsübertragung zwischen Zugfahrzeug und Anhänger gestatten.

Aus der US 1,336,665 ist eine Hintereinanderordnung von einer Mehrzahl von einzelnen Wagons bekannt. Die Wagons sind verdrehbar zueinander angeordnet, zu welchem Zweck eine gelenkig mit den Wagons gekoppelte Zugstange zum Einsatz kommt. Jeder Wagon ist zweiteilig ausgebildet und verfügt über zwei gelenkig miteinander gekoppelte Wagonteile. Es sind zu diesem Zweck Koppelstangen vorgesehen, die die Wagonteile miteinander koppeln. Jeder Wagon verfügt zudem über zwei Klauenteile, wobei jedes Klauenteil jeweils durch Verschwenken aus einer Gebrauchsstellung in eine Nicht-Gebrauchsstellung und umgekehrt überführbar ist. In der Gebrauchsstellung wirkt ein Klauenteil mit einer jeweils zugehörigen Zugstange zusammen, wodurch die Verschwenkbarkeit der Zugstange in Relation zum Wagon gesperrt ist.

Die US 1,020,393 offenbart eine Ausgleichsschleppkupplungsvorrichtung. Diese verfügt über zwei jeweils endseitig an Achsen gelenkig angeordnete Stangen. Dabei sind die beiden Stangen gekreuzt zueinander ausgerichtet, zu welchem Zweck die eine der beiden Stangen als Doppelstange ausgeführt ist und einen Schlitz bereitgestellt, durch den hindurch die andere Stange geführt ist.

Die DE 10 2011 118 363 A1 beschreibt ein Transportsystem für Transportbehälter, mit einem Trägerrahmen, welcher mit Laufrollen ausgestattet ist, die jeweils annähernd in der Mitte der Seitenränder des Trägerrahmens angeordnet sind. Das Transportsystem verfügt des Weiteren über einen zweiten Trägerrahmen, der Zentrierungselemente aufweist. Diese Zentrierungselemente ermöglichen ein exaktes Ausrichten der beiden Trägerrahmen relativ zueinander.

Davon ausgehend liegt der vorliegenden Erfindung die Aufgabe zugrunde, einen Transportanhängerverbund anzugeben, der bei kostengünstiger Konstruktion gute Fahreigenschaften, insbesondere eine hohe Spurtreue, sowie eine leichte Bedienbarkeit im Handverzug bietet.

Diese Aufgabe wird durch einen Transportanhängerverbund mit den in Anspruch 1 angegebenen Merkmalen gelöst. Bevorzugte und vorteilhafte Ausgestaltungen des erfindungsgemäßen Transportanhängerverbundes sind in den von Anspruch 1 abhängigen Unteransprüchen angegeben.

Bei dem erfindungsgemäßen Transportanhängerverbund der eingangs genannten Art entspricht somit der Abstand eines durch das vordere Verbindungselement definierten Gelenkpunktes von einem Achsmittelpunkt der Drehachse im Wesentlichen dem Abstand eines durch das hintere Verbindungselement definierten Gelenkpunktes von dem Achsmittelpunkt der Drehachse, wobei die Koppelstange in einer im Wesentlichen horizontalen Ebene drehbar in den Gelenkpunkten der Verbindungselemente gelagert ist, wobei die durch die Koppelstange miteinander verbundenen Transportanhänger zusätzlich durch eine Gelenkstrebe miteinander verbunden sind, und wobei die Gelenkstrebe an zusätzlichen Verbindungselementen, die an den durch die Koppelstange gekoppelten Fahrwerken angeordnet sind, derart gelagert ist, dass die Gelenkstrebe in einer im Wesentlichen horizontalen Ebene drehbar gelagert ist und schräg zur Längsmittelachse der Koppelstange verläuft.

Die Transportanhänger sind grundsätzlich als im Wesentlichen symmetrische Einachsanhänger mit einer vorzugsweise mittig angeordneten Laufrollen-Drehachse ausgelegt. Mit im Wesentlichen symmetrische Einachsanhänger ist gemeint, dass der Abstand eines durch das vordere Verbindungselement definierten Gelenkpunktes von einem Achsmittelpunkt der Drehachse auch etwas größer oder kleiner sein kann als der Abstand eines durch das hintere Verbindungselement definierten Gelenkpunktes von dem Achsmittelpunkt der Drehachse. Der Unterschied der beiden Abstände voneinander sollte jedoch maximal 10 %, vorzugsweise maximal 8 %, besonders bevorzugt maximal 5% nicht überschreiten. Bei einer solchen relativ geringen Abweichung ist eine hohe Spurtreue des Transportanhängerverbunds noch gegeben, da der ziehende Hebel eines Transportanhänger, also der Abstand des durch das vordere Verbindungselements definierten Gelenkpunkts von dem Achsmittelpunkt der Drehachse, im Wesentlichen dem gezogenen Hebel des jeweiligen Transportanhängers, also dem Abstand des durch das hintere Verbindungselement definierten Gelenkpunktes von dem Achsmittelpunkt der Drehachse, entspricht.

Durch die Koppelstange und die schräg zur Längsmittelachse der Koppelstange verlaufende Gelenkstrebe wird ermöglicht, dass die Spurführung des ziehenden Transportanhängers an den nachfolgenden, von diesem gezogenen Transportanhänger übertragen wird. Dabei entspricht der jeweilige Winkel, den die hinteren Seite des ziehenden Transportanhängers mit der Koppelstange während einer Kurvenfahrt des Transportanhängerverbunds bildet, im Wesentlichen dem Winkel, den die vordere Seite des gezogenen Transportanhängers mit der Koppelstange bildet.

Sind zwei Transportanhänger in der erfindungsgemäßen Weise über die Koppelstange und die schräg zur Längsmittelachse der Koppelstange verlaufende Gelenkstrebe miteinander verbunden, so befinden sich bei einer Kurvenfahrt dieses Transportanhängerverbundes alle gezogenen Punkte und alle ziehenden Punkte der Transportanhänger im Wesentlichen auf derselben Kreisbahn um den Mittelpunkt des Kurvenradius. Somit erhält man ein System, welches bei konstanter Kurvenfahrt keinen Spurverlust aufweist.

Durch die zusätzliche Verbindung über die Gelenkstrebe stützen sich die durch die Koppelstange miteinander verbundenen Transportanhänger bei Geradeausfahrt aneinander ab und neigen deshalb nicht zum Pendeln. Zudem wird durch diese Abstützung verhindert, dass bei Notbremsungen in Kurven der vordere bzw. die vorderen Transportanhänger ausbrechen. Denn die Gelenkstrebe verhindert, dass der vordere bzw. die vorderen Transportanhänger vom Gewicht der folgenden Transportanhänger aus der Spur geschoben werden.

Der erfindungsgemäße Transportanhängerverbund zeichnet sich somit durch erhebliche verbesserte Fahreigenschaften, insbesondere eine hohe Spurtreue aus.

Ferner lässt sich der erfindungsgemäße Transportanhängerverbund kostengünstig realisieren, da konstruktiv einfache Einachsanhänger ohne eine aufwendige Lenkung, wie etwa eine Drehschemel-Lenkung, genutzt werden können. Es ist dabei im Grunde lediglich erforderlich, dass die Transportanhänger Verbindungselemente zum Anbinden der Koppelstange und zusätzliche Verbindungselemente zum Anbinden der Gelenkstrebe aufweisen.

Wird ein Transportanhänger aus dem erfindungsgemäßen Transportanhängerverbund herausgelöst, so lässt er sich als einzelner Transportanhänger im Handverzug genauso einfach manövrieren wie andere Transportanhänger mit Rauten- oder 6-Rad-Fahrwerk.

Ein weiterer Vorteil des erfindungsgemäßen Transportanhängerverbundes besteht darin, dass dieser aufgrund der im Wesentlichen symmetrischen Fahrwerksauslegung des jeweiligen Transportanhängers in beide Fahrtrichtungen gleichermaßen gut funktioniert. Somit ist ein Wenden des kompletten Anhängerverbundes an Engstellen nicht notwendig. Vielmehr genügt es, die Zugmaschine abzukoppeln, zu wenden und am anderen Ende des Anhängerverbundes wieder anzukoppeln.

Nach einer vorteilhaften Ausgestaltung sind die zusätzlichen Verbindungselemente als starre Gelenkarme ausgeführt, wobei einer der starren Gelenkarme gegenüber dem vorderen Verbindungselement und ein anderer der starren Gelenkarme gegenüber dem hinteren Verbindungselement vorsteht. Hierdurch wird es ermöglicht, dass die durch die starren Gelenkarme definierten Anbindungspunkte für die Gelenkstrebe zwischen den Gelenkpunkten der Verbindungselemente liegen. Durch diese Ausgestaltung wird eine stabilere Abstützung der Transportanhänger untereinander erreicht, wodurch ein Aufschaukeln oder Pendeln des Transportanhängerverbundes bei äußeren Störeinflüssen besonders zuverlässig verhindert werden kann. Weiterhin kann die Lenkbewegung des Transportanhängerverbundes von einem Transportanhänger zu dem nächsten Transportanhänger zuverlässiger übertragen werden.

Weiter ist es bevorzugt, dass die Gelenkstrebe eine längliche Durchgangsöffnung begrenzt, durch welche sich die Koppelstange hindurch erstreckt. Hierdurch lässt sich die Gelenkstrebe mit relativ geringem Gewicht und gleichwohl ausreichender Stabilität ausführen. Weiter kann die Gelenkstrebe aufgrund der länglichen Durchgangsöffnung auf derselben Höhe wie die Koppelstange angeordnet sein, was insbesondere konstruktiv günstig ist, da hierdurch die Verbindungselemente sowie die zusätzlichen Verbindungselemente im Wesentlichen auf derselben Höhe des Transportanhängers angeordnet sein können. Es ergibt sich somit eine relativ kompakte, wenig Platz beanspruchende Konstruktion.

Nach einer weiteren bevorzugten Ausgestaltung weist die Gelenkstrebe zwei parallel zueinander verlaufende Stege auf, die durch zwei Querstege miteinander verbunden sind. Dadurch kann in konstruktiv einfacher Ausgestaltung eine Gelenkstrebe mit einer länglichen Durchgangsöffnung zur Verfügung gestellt werden. Insbesondere wird so wenig Material zur Herstellung der Gelenkstrebe mit der erforderlichen Festigkeit benötigt.

Weiter ist es bevorzugt, dass die Koppelstange länger ist als die Gelenkstrebe. Durch diese Ausgestaltung wird eine stabilere Abstützung der Transportanhänger untereinander erreicht, wodurch ein Aufschaukeln oder Pendeln des Transportanhängerverbundes bei äußeren Störeinflüssen besonders zuverlässig verhindert werden kann. Weiterhin ist eine gewisse Länge der Koppelstange notwendig, damit sich die miteinander gekoppelten Transportanhänger untereinander bei einer engen Kurvenfahrt nicht berühren.

Nach einer weiteren bevorzugten Ausgestaltung sind die Verbindungselemente und/oder die zusätzlichen Verbindungselemente mittels Metallprofilen und Schraubbolzen an den miteinander gekoppelten Transportanhängern befestigt. Dabei sind die Metallprofile vorzugsweise als U-Profile ausgestaltet. Hierdurch können auch bereits vorhandene Transportanhänger mit den Verbindungselementen beziehungsweise den zusätzlichen Verbindungselementen ohne großen Mehraufwand nachgerüstet werden. Alternativ können die Metallprofile bzw. Verbindungselemente sowie zusätzlichen Verbindungselemente allerdings auch nur kraftschlüssig oder stoffschlüssig, beispielsweise durch Schweißverbindungen, an den miteinander gekoppelten Transportanhängern befestigt sein.

Des Weiteren ist es bevorzugt, dass der Transportanhängerverbund bidirektional fahrbar ist. Dies wird insbesondere durch die im Wesentlichen symmetrische Ausgestaltung des Fahrwerks - also dem zuvor beschriebenen Abstand zwischen den Gelenkpunkten und dem Achsmittelpunkt der Drehachse - der einzelnen Transportanhänger ermöglicht. Somit ist ein Wenden des kompletten Transportanhängerverbundes beispielsweise an Engstellen nicht notwendig. Es ist ausreichend, das Schleppfahrzeug von dem vordersten Transportanhänger abzukoppeln und am anderen Ende des Transportanhängerverbundes wieder anzukoppeln. Aufgrund der im Wesentlichen symmetrischen Ausgestaltung des Fahrwerks der Transportanhänger weist der daraus gebildete Zugverbund in beide Fahrrichtungen im Wesentlichen die gleichen Fahreigenschaften auf.

Nach einer weiter bevorzugten Ausgestaltung weist mindestens einer der Transportanhänger in Ergänzung zu den Laufrollen Lenkrollen auf, die zusammen mit den Laufrollen nach Art eines Rauten- oder 6-Rad-Fahrwerks angeordnet sind. Die Lenkrollen stützen den betreffenden Transportanhänger vorteilhaft ab, so dass dieser im abgekoppelten Zustand als einzelner Transportanhänger im Handverzug komfortabler verfahren werden kann und sein Fahrgestellrahmen bzw. Anhängerboden in Parkstellungen des Transportanhängers im Wesentlichen parallel zum Fahruntergrund ausgerichtet bleibt. Vorzugsweise weist der jeweilige Transportanhänger des erfindungsgemäßen Transportanhängerverbundes ein Rautenfahrwerk auf, das aus zwei eine gemeinsame Drehachse definierenden Bockrollen und zwei Lenkrollen, nämlich eine vordere und eine hintere Lenkrolle, gebildet ist.

Des Weiteren ist es bevorzugt, dass die Koppelstange und/oder die Gelenkstrebe mit den ihnen/ihr zugeordneten Verbindungselementen mittels Kupplungsbolzen verbunden sind/ist. Die Kupplungsbolzen sind dabei vorzugsweise über Sicherungsringe gesichert, so dass die Verbindung zwischen der Koppelstange und/oder der Gelenkstrebe mit den ihnen/ihr zugeordneten Verbindungselementen nicht ohne manuelles Einwirken lösbar ist. Zudem wird es durch die Kupplungsbolzen und die Sicherung der Kupplungsbolzen durch Sicherungsringe ermöglicht, die einzelnen Transportanhänger eines Transportanhängerverbundes ohne Werkzeug manuell voneinander zu lösen beziehungsweise manuell miteinander zu verbinden. Hierdurch kann schnell und auf komfortable Weise ein Transportanhänger von dem Transportanhängerverbund abgekoppelt werden, beziehungsweise ein Transportanhänger dem Transportanhängerverbund hinzugefügt werden.

Nach einer weiteren bevorzugten Ausgestaltung sind/ ist die Koppelstange und/oder die Gelenkstrebe mit den ihnen/ihr zugeordneten Verbindungselementen mittels Schraubbolzen verbunden. Die Schraubbolzen sind dabei vorzugsweise über Muttern gesichert, so dass sich die Verbindung zwischen der Koppelstange und/oder der Gelenkstrebe mit den ihnen/ihr zugeordneten Verbindungselementen nicht ohne weiteres während des Fahrens des Transportanhängerverbundes lösen kann. Im Unterschied zu Kupplungsbolzen bieten Schraubbolzen, insbesondere Schraubbolzen mit dazugehörigen Muttern den Vorteil, dass die damit verbundenen Bauteile untereinander kein oder nur ein sehr geringes vertikales Spiel aufweisen, wodurch die Stabilität der Verbindung verbessert wird.

Eine weitere vorteilhafte Ausgestaltung der Erfindung sieht vor, dass die Koppelstange und die Gelenkstrebe in einem einseitig abgekoppelten Zustand im Wesentlichen horizontal oder vertikal an den jeweiligen Transportanhänger heran klappbar sind und vorzugsweise mittels eines oder mehrerer an dem Transportanhänger montierter Sicherungselemente gegen ungewolltes Abklappen fixierbar sind. Hierdurch kann ein abgekoppelter Transportanhänger platzsparend geparkt werden. Vorteilhaft ist hierdurch auch, dass die Koppelstange und die Gelenkstrebe unmittelbar griffbereit zur Verfügung stehen. Wenn der abgekoppelte Transportanhänger erneut an einen Transportanhängerverbund anzukoppeln ist, müssen die Koppelstange und die Gelenkstrebe nicht gesucht oder aufwendig herangeholt werden. Außerdem müssen bei dieser Ausgestaltung die Koppelstange und die Gelenkstrebe zum Ankoppeln des Transportanhängers nur mit einem Transportanhänger einseitig verbunden werden und nicht mit beiden der miteinander zu koppelnden Transportanhänger.

Nach einer weiteren bevorzugten Ausgestaltung der Erfindung umfasst ein Transportanhängerzug mindestens zwei Transportanhängerverbunde, wobei der jeweilige Transportanhängerverbund gemäß Anspruch 1 oder gemäß mindestens einer der anderen zuvor genannten Ausgestaltungen ausgeführt ist, wobei die Transportanhängerverbunde über eine Deichsel und eine Anhängerkupplung oder über eine Koppelstange und zwei Anhängerkupplungen oder über zwei Halbdeichseln miteinander verbunden sind. Anders ausgedrückt ist dieser Transportanhängerzug aus zwei oder mehr Gruppen des erfindungsgemäßen Transportanhängerverbundes zusammengestellt, wobei die Gruppen über klassische Kupplungs-/ Deichselsysteme miteinander verbunden werden. Durch eine Unterbrechung der starren Gelenkstreben-Verbindung zwischen den Transportanhängerverbunden (Gruppen) wird die Lenkbewegung der Zugmaschine nicht unmittelbar auf alle Transportanhänger übertragen, wodurch eine zu starke Ausholbewegung des Transportanhängerzuges vor einer Kurvenfahrt vermieden wird. Denn die aus der Lenkbewegung resultierende Bahnkurve wird so zunächst nur auf den vordersten Transportanhängerverbund übertragen und wird erst dann im Laufe der Kurvenfahrt auch an die weiteren Transportanhängerverbunde übertragen. Dennoch besitzt ein solcher Transportanhängerzug eine erheblich gesteigerte Spurtreue und auch ein Aufschaukeln eines solchen Transportanhängerzuges wird durch die Anordnung mehrerer gemäß Anspruch 1 ausgeführter Transportanhängerverbunde indem Zug weitgehend verhindert.

Im Folgenden wird die Erfindung anhand von Ausführungsbeispielen mit Bezug auf die Zeichnung näher erläutert. In der Zeichnung zeigen
- Fig. 1: einen Abschnitt eines erfindungsgemäßen Transportanhängerverbundes in einer perspektivischen Darstellung;
- Fig. 2: eine vergrößerte Darstellung der Verbindung von zwei Transportanhängern aus Fig. 1;
- Fig. 3: eine erfindungsgemäße Koppelstangenanordnung mit zugehöriger Gelenkstrebe in Draufsicht;
- Fig. 4: den Transportanhängerverbund gemäß Fig. 1 während einer Kurvenfahrt in Draufsicht;
- Fig. 5: eine schematische Darstellung eines Einachsanhängers während einer Kurvenfahrt in Draufsicht; und
- Fig. 6 und 7: zwei verschiedene, schematisch dargestellte Einachsanhänger, in Draufsicht, jeweils mit einer horizontal starren Deichsel, die in Fahrtrichtung gesehen vorne bzw. hinten an dem Einachsanhänger angeordnet ist.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

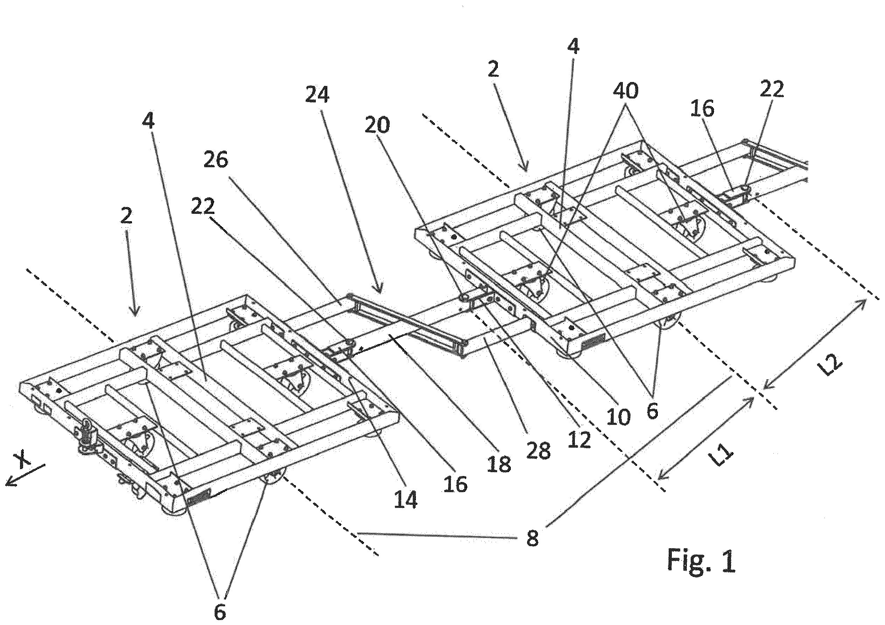

Fig. 1 zeigt einen Abschnitt eines erfindungsgemäßen Transportanhängerverbundes in einer perspektivischen Ansicht. Dabei sind zwei Transportanhänger 2 vollständig dargestellt, welche jeweils ein Fahrwerk 4 mit an dem Fahrwerk 4 angeordneten Laufrollen 6 und Lenkrollen 40 aufweisen. Die Laufrollen 6 und die Lenkrollen 40 sind in Form einer Raute angeordnet. Diese Art des Fahrwerks 4 wird auch als Rautenfahrwerk bezeichnet. Die Laufrollen 6 des jeweiligen Transportanhängers 2 sind um eine gemeinsame Drehachse 8 drehbar und vorzugsweise als Bockrollen ausgebildet.

Die beiden Transportanhänger 2 sind in beide Richtungen fahrbar, wobei die Fahrtrichtung X für die Richtungsbestimmung als die momentane Fahrtrichtung definiert ist.

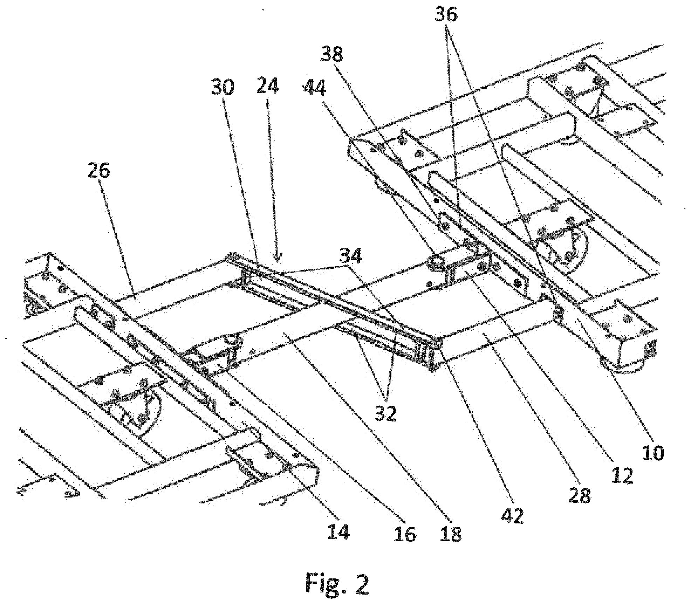

An der vorderen Seite 10 des Transportanhängers 2 ist ein Verbindungselement 12 ausgebildet, das der Verbindung des Transportanhängers 2 mit einer Koppelstange 18 dient. Dabei ist das Verbindungselement 12 über einen Gelenkpunkt 20 mit der Koppelstange 18 gelenkig verbunden. Die spezifische Ausgestaltung dieser Verbindung ist in Fig. 2 besser zu erkennen. Weiter weist die vordere Seite 10 des zweiten Transportanhängers 2 ein zusätzliches Verbindungselement auf, welches als starrer Gelenkarm 28 ausgestaltet ist. Der Gelenkarm 28 ist an seiner dem Transportanhänger 2 abgewandten Seite mit einer Gelenkstrebe 24 gelenkig verbunden. Die Gelenkstrebe 24 verläuft schräg zur Längsmittelachse der Koppelstange 18. Die Gelenkstrebe 24 kann auch als Diagonalstrebe bezeichnet werden.

An der hinteren Seite 14 des jeweiligen Transportanhängers 2 sind ebenfalls ein Verbindungselement 16 und ein zusätzliches Verbindungselement in Form eines starren Gelenkarms 26 ausgebildet. Das Verbindungselement 16 ist wiederum mit der Koppelstange 18 über einen Gelenkpunkt 22 gelenkig verbunden. Weiter ist der Gelenkarm 26 an seiner dem Transportanhänger 2 abgewandten Seite mit der Gelenkstrebe 24 gelenkig verbunden.

Dabei steht einer der Gelenkarme 26 gegenüber dem vorderen Verbindungselement 16 und ein anderer der Gelenkarme 28 gegenüber dem hinteren Verbindungselement 12 vor. In diesem Ausführungsbeispiel sind die Anbindungspunkte der Gelenkstrebe 24 somit jeweils weiter entfernt von den Transportanhängern 2 angeordnet, als die Gelenkpunkte 20 und 22 der Koppelstange 18.

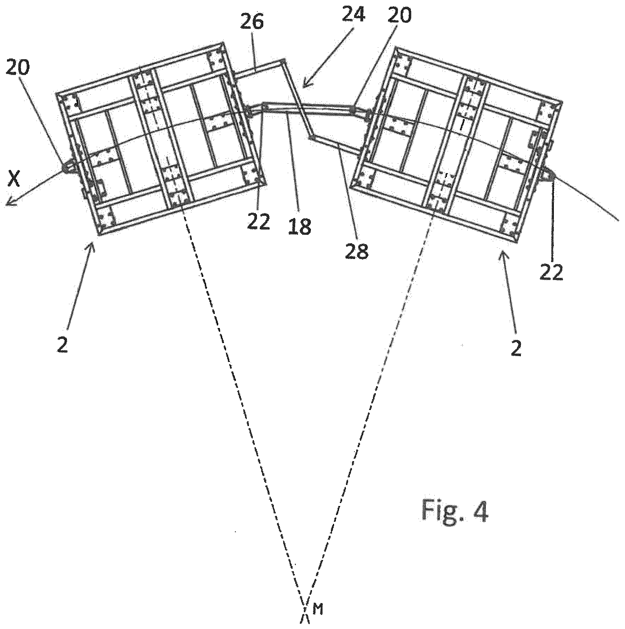

Es ist in den Figuren 1 und 4 ersichtlich, dass das Fahrwerk 4 des jeweiligen Transportanhängers 2 symmetrisch ausgeführt ist, wobei die Drehachse 8 der Laufrollen (Bockrollen) 6 mittig angeordnet ist. Der Abstand L1 des vorderen Gelenkpunkts 20 von dem Achsmittelpunkt der Drehachse 8 des Transportanhängers 2 entspricht im Wesentlichen dem Abstand L2 des Achsmittelpunkts der Drehachse 8 von dem hinteren Gelenkpunkt 22 des Transportanhängers 2. Hierdurch wird ein spurtreues Fahrverhalten des Transportanhängerverbundes gewährleistet. Eine derartige Ausgestaltung ist auch für jeden weiteren Anhänger 2 gegeben.

Wie in Fig. 1 angedeutet, kann der Transportanhängerverbund eine Vielzahl von Transportanhängern 2 umfassen. Hierzu werden die aneinander zu koppelnden Transportanhänger 2 gemäß dem dargestellten Verbindungssystem jeweils über eine Koppelstange 18 und eine Gelenkstrebe 24 miteinander verbunden. An die vordere Seite 10 des vordersten Transportanhängers 2 wird ein Schleppfahrzeug (nicht gezeigt) gekoppelt, so dass der Transportanhängerverbund als Routenzug gefahren werden kann. Alternativ kann ein einzelner Transportanhänger 2 auch im Handverzug bewegt werden.

In Fig. 2 ist eine vergrößerte Darstellung der Verbindung von zwei Transportanhängern 2 aus Fig. 1 dargestellt. Die Gelenkstrebe 24 weist eine längliche Durchgangsöffnung 30 auf, durch welche sich die Koppelstange 18 hindurch erstreckt. Dabei ist die Gelenkstrebe 24 vorzugsweise derart ausgebildet, dass sie zwei parallel zueinander verlaufende Stege 34 aufweist, die durch zwei Querstege 32 miteinander verbunden sind.

Es ist ersichtlich, dass die Koppelstange 18 länger ausgebildet ist als die Gelenkstrebe 24, wobei die Gelenkarme 26 und 28 deutlich weiter von dem jeweiligen Transportanhänger 2 beabstandet sind als die Verbindungselemente 12 und 16. Die Gelenkarme 26, 28 sind vorzugsweise gleich lang. Die Verbindungselemente 12, 16 sind jeweils mittig an der vorderen Seite 10 bzw. hinteren Seite 14 des Transportanhängers 2 angeordnet. Der Gelenkarm 28 ist zwischen dem Verbindungselement 12 und einer der vorderen Ecken, beispielsweise der linken vorderen Ecke des Fahrwerks 4 angebracht. Ebenso ist der Gelenkarm 26 zwischen dem Verbindungselement 16 und einer der hinteren Ecken des Fahrwerks 4 angebracht, wobei dann, wenn der Gelenkarm 28 in Fahrtrichtung X gesehen links von dem Verbindungselement 12 angeordnet ist, der gegenüberliegende Gelenkarm 26 in Fahrtrichtung X gesehen rechts von dem Verbindungselement 16 angeordnet ist. Alternativ könnte der Gelenkarm 26 auch links von dem Verbindungselement 16 angebracht werden, sofern der dann gegenüberliegende Gelenkarm 28 in Fahrtrichtung X gesehen rechts von dem Verbindungselement 12 angeordnet wird.

Die Verbindungselemente 12 und 16 und die Gelenkarme 26 und 28 sind mittels Metallprofilen 36 und Schraubbolzen 38 an den miteinander gekoppelten Transportanhängern 2 befestigt. Dabei werden die Schraubbolzen 38 über Muttern gesichert. Die Metallprofile 36 sind vorzugsweise als U-Profile ausgestaltet.

Weiter ist die Gelenkstrebe 24 mit den Gelenkarmen 26 und 28 mittels Schraubbolzen 42 verbunden. Die Schraubbolzen 42 sind dabei durch Muttern gesichert, so dass die Verbindung zwischen Gelenkstrebe 24 und Gelenkarmen 26, 28 gegen zufälliges Lösen gesichert ist.

Die Koppelstange 18 ist mit den Verbindungselementen 12 und 16 mittels Kupplungsbolzen 44 verbunden. Die Kupplungsbolzen 44 sind dabei durch Sicherungselemente, z.B. Sicherungsringe (nicht dargestellt) gesichert, so dass die Verbindung zwischen Koppelstange 18 und den Verbindungselementen 12 und 16 gegen zufälliges Lösen gesichert ist.

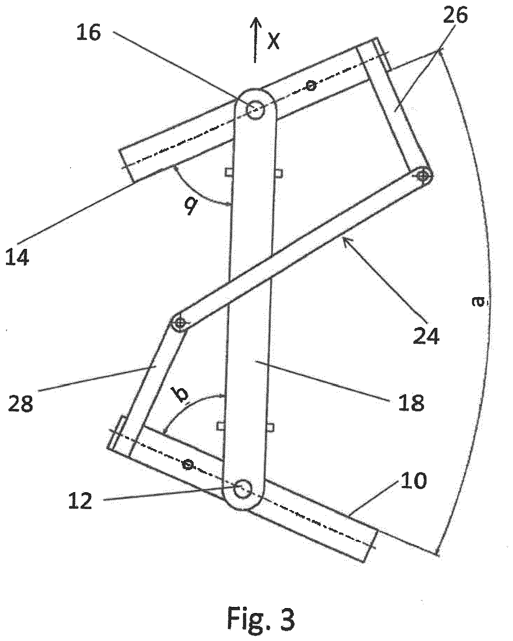

In Fig. 3 ist eine erfindungsgemäße Koppelstangenanordnung mit zugehöriger Gelenkstrebe in Draufsicht dargestellt. Dabei entspricht der Winkel b, den die hinteren Seite 14 des ziehenden Transportanhängers mit der Koppelstange 18 während einer Kurvenfahrt des Transportanhängerverbunds bildet, im Wesentlichen dem Winkel b, den die vordere Seite 10 des gezogenen Transportanhängers mit der Koppelstange 18 bildet. Der Winkel b entspricht dabei der Hälfte des Winkels a, den die Seiten 10 und 14 der miteinander gekoppelten Anhänger 2 definieren oder einschließen (b = a/2).

Durch die zusätzliche Verbindung der beiden Transportanhänger 2 über die schräg zu der Koppelstange 18 verlaufenden Gelenkstrebe 24 stützen sich die Transportanhänger 2 bei Geradeausfahrt aneinander ab und neigen daher nicht zum Pendeln. Das Nachlaufverhalten der miteinander gekoppelten Transportanhänger 2 ist somit optimiert. Das Spurverhalten des vorderen Transportanhängers 2 wird durch die Gelenkarme 26 und 28 und die Gelenkstrebe 24 direkt an den nachfolgenden Transportanhänger 2 übertragen.

Fig. 4 zeigt den erfindungsgemäßen Transportanhängerverbund während einer Kurvenfahrt in einer Draufsicht. Diese Darstellung dient insbesondere zur Veranschaulichung der Funktion des erfindungsgemäßen Transportverbundes. Dabei ist ersichtlich, dass während einer Kurvenfahrt alle gezogenen Punkte und alle ziehenden Punkte sich auf einer Kreisbahn um den Mittelpunkt M befinden. Bei den gezogenen und ziehenden Punkten handelt es sich um die Gelenkpunkte 20 und 22 der Verbindungselemente 12 und 16.

Diese Gelenkpunkte 20 und 22 liegen deshalb auf einer Kreisbahn um den Mittelpunkt M, weil die Abstände zwischen den Gelenkpunkten 20 und 22 und der Achse 8 im Wesentlichen identisch ist Ein Aufschaukeln der Transportanhänger 2, zu welchem es bei einer symmetrischen Auslegung des Fahrwerks 4 mit mittig angeordneter Drehachse 8 der Laufrollen (Bockrollen) 6 kommen kann, wird durch die zusätzliche Verbindung der Transportanhänger 2 über die Gelenkstrebe 24 und die Gelenkarme 26 und 28 verhindert.

## Patentansprüche

1. Transportanhängerverbund mit mindestens zwei miteinander gekoppelten Transportanhängern (2), deren jeweiliges Fahrwerk (4) mindestens zwei Laufrollen (6) aufweist, die um eine gemeinsame Drehachse (8) drehbar sind, wobei das jeweilige Fahrwerk (4) in Fahrtrichtung (X) betrachtet an seiner vorderen Seite (10) ein vorderes Verbindungselement (12) und an seiner hinteren Seite (14) ein hinteres Verbindungselement (16) aufweist, und wobei das vordere Verbindungselement (12) und das hintere Verbindungselement (16) zur gelenkigen Anbindung einer zwei der Transportanhänger (2) miteinander verbindenden Koppelstange (18) ausgeführt sind,
**dadurch gekennzeichnet,**
**dass** der Abstand (L1) eines durch das vordere Verbindungselement (12) definierten Gelenkpunktes (20) von einem Achsmittelpunkt der Drehachse (8) im Wesentlichen dem Abstand (L2) eines durch das hintere Verbindungselement (16) definierten Gelenkpunktes (22) von dem Achsmittelpunkt der Drehachse (8) entspricht, wobei die Koppelstange (18) in einer horizontalen Ebene drehbar in den Gelenkpunkten (20, 22) der Verbindungselemente (12, 16) gelagert ist, wobei die durch die Koppelstange (18) miteinander verbundenen Transportanhänger (2) zusätzlich durch eine Gelenkstrebe (24) miteinander verbunden sind, und wobei die Gelenkstrebe (24) an zusätzlichen Verbindungselementen (26, 28), die an den durch die Koppelstange (18) gekoppelten Fahrwerken (4) angeordnet sind, derart gelagert ist, dass die Gelenkstrebe (24) in einer horizontalen Ebene drehbar gelagert ist und schräg zur Längsmittelachse der Koppelstange (18) verläuft.

2. Transportanhängerverbund nach Anspruch 1, **dadurch gekennzeichnet, dass** die zusätzlichen Verbindungselemente als starre Gelenkarme (26, 28) ausgeführt sind, wobei einer der starren Gelenkarme (26) gegenüber dem vorderen Verbindungselement (16) und ein anderer der starren Gelenkarme (28) gegenüber dem hinteren Verbindungselement (12) vorsteht.

3. Transportanhängerverbund nach Anspruch 1 oder 2, **dadurch gekennzeichnet, dass** die Gelenkstrebe (24) eine längliche Durchgangsöffnung (30) begrenzt, durch welche sich die Koppelstange (18) hindurch erstreckt.

4. Transportanhängerverbund nach einem der Ansprüche 1 bis 3, **dadurch gekennzeichnet, dass** die Gelenkstrebe (24) zwei parallel zueinander verlaufende Stege (34) aufweist, die durch zwei Querstege (32) miteinander verbunden sind.

5. Transportanhängerverbund nach einem der Ansprüche 1 bis 4, **dadurch gekennzeichnet, dass** die Koppelstange (18) länger ist als die Gelenkstrebe (24).

6. Transportanhängerverbund nach einem der Ansprüche 1 bis 5, **dadurch gekennzeichnet, dass** die Verbindungselemente (12, 16) und/oder die zusätzlichen Verbindungselemente (26, 28) mittels Metallprofilen (36) und Schraubbolzen (38) an den miteinander gekoppelten Transportanhängern (2) befestigt sind.

7. Transportanhängerverbund nach einem der Ansprüche 1 bis 6, **dadurch gekennzeichnet, dass** dieser bidirektional fahrbar ist.

8. Transportanhängerverbund nach einem der Ansprüche 1 bis 7, **dadurch gekennzeichnet, dass** mindestens einer der Transportanhänger (2) in Ergänzung zu den Laufrollen (6) Lenkrollen (40) aufweist, die zusammen mit den Laufrollen (6) nach Art eines Rauten- oder 6-Rad-Fahrwerks angeordnet sind.

9. Transportanhängerverbund nach einem der Ansprüche 1 bis 8, **dadurch gekennzeichnet, dass** die Koppelstange (18) und/oder die Gelenkstrebe (24) mit den ihnen/ihr zugeordneten Verbindungselementen (12, 16, 26, 28) mittels Kupplungsbolzen (44) verbunden sind/ist.

10. Transportanhängerverbund nach einem der Ansprüche 1 bis 8, **dadurch gekennzeichnet, dass** die Koppelstange (18) und/oder die Gelenkstrebe (24) mit den ihnen/ihr zugeordneten Verbindungselementen (12, 16, 26, 28) mittels Schraubbolzen (42) verbunden sind/ist.

11. Transportanhängerverbund nach einem der Ansprüche 1 bis 10, **dadurch gekennzeichnet, dass** die Koppelstange (18) und die Gelenkstrebe (24) in einem einseitig abgekoppelten Zustand im Wesentlichen horizontal oder vertikal an den jeweiligen Transportanhänger (2) heran klappbar sind und vorzugsweise mittels eines oder mehrerer an dem Transportanhänger (2) montierter Sicherungselemente gegen ungewolltes Abklappen fixierbar sind.

12. Transportanhängerzug mit mindestens zwei Transportanhängerverbunden, wobei der jeweilige Transportanhängerverbund nach einem der Ansprüche 1 bis 11 ausgeführt ist, **dadurch gekennzeichnet, dass** die Transportanhängerverbunde über eine Deichsel und eine Anhängerkupplung oder über eine Koppelstange (18) und zwei Anhängerkupplungen oder über zwei Halbdeichseln miteinander verbunden sind.

## Claims

1. Transport trailer composite with at least two transport trailers (2) coupled to each other, the respective chassis (4) of which has at least two rollers (6) which are rotatable about a common axis of rotation (8), wherein the respective chassis (4), viewed in the direction of travel (X), has a front connecting element (12) on its front side (10) and a rear connecting element (16) on its rear side (14), and wherein the front connecting element (12) and the rear connecting element (16) are designed for the articulated connection of a coupling rod (18) connecting two of the transport trailers (2) to one another,
**characterized in that**
the distance (L1) of a fulcrum (20) defined by the front connecting element (12) from an axis center of the axis of rotation (8) substantially corresponds to the distance (L2) of a fulcrum (22) defined by the rear connecting element (16) from the axis center of the axis of rotation (8), the coupling rod (18) being supported rotatably in a horizontal plane in the fulcrums (20, 22) of the connecting elements (12, 16), wherein the transport trailers (2) connected to one another by the coupling rod (18) are additionally connected to one another by an articulated strut (24) and wherein the articulated strut (24) is mounted on additional connecting elements (26, 28) arranged on the chassis (4) coupled by the coupling rod (18) in such a way that the articulated strut (24) is supported rotatably in a horizontal plane and runs obliquely to the longitudinal central axis of the coupling rod (18).

2. Transport trailer composite according to claim 1, **characterized in that** the additional connecting elements are designed as rigid articulated arms (26, 28), wherein one of the rigid articulated arms (26) projects with respect to the front connecting element (16) and another of the rigid articulated arms (28) projects with respect to the rear connecting element (12).

3. Transport trailer composite according to claim 1 or 2, **characterized in that** the articulated strut (24) defines an elongate through opening (30) through which the coupling rod (18) extends.

4. Transport trailer composite according to any one of claims 1 to 3, **characterized in that** the articulated strut (24) has two webs (34) running parallel to one another, which are connected to one another by two crossbars (32).

5. Transport trailer composite according to any one of the claims 1 to 4, **characterized in that** the coupling rod (18) is longer than the articulated strut (24).

6. Transport trailer composite according to any one of claims 1 to 5, **characterized in that** the connecting elements (12, 16) and/or the additional connecting elements (26, 28) are fastened to the transport trailers (2) coupled to one another by means of metal profiles (36) and screw bolts (38).

7. Transport trailer composite according to any one of claims 1 to 6, **characterized in that** it is bi-directionally movable.

8. Transport trailer composite according to any one of claims 1 to 7, **characterized in that** at least one of the transport trailers (2) has guide rollers (40) in addition to the rollers (6), which guide rollers together with the rollers (6) are arranged in the manner of a diamond or 6-wheel chassis.

9. Transport trailer composite according to any one of claims 1 to 8, **characterized in that** the coupling rod (18) and/or the articulated strut (24) is/are connected to the connecting elements (12, 16, 26, 28) associated therewith by means of coupling bolts (44).

10. Transport trailer composite according to any one of claims 1 to 8, **characterized in that** the coupling rod (18) and/or the articulated strut (24) is/are connected to the connecting elements (12, 16, 26, 28) associated therewith by means of screw bolts (42).

11. Transport trailer composite according to any one of claims 1 to 10, **characterized in that** the coupling rod (18) and the articulated strut (24), when disconnected on one side, can be folded substantially horizontally or vertically towards the respective transport trailer (2) and can preferably be fixed against unintentional folding down by means of one or more securing elements mounted on the transport trailer (2).

12. Transport trailer train having at least two transport trailer composites, the respective transport trailer composite being designed according to one of claims 1 to 11, **characterized in that** the transport trailer composites are connected to one another via a drawbar and a trailer coupling or via a coupling rod (18) and two trailer couplings or via two half-drawbars.

## Revendications

1. Raccordement de remorque de transport comprenant au moins deux remorques de transport (2) accouplées l'une à l'autre, dont le châssis respectif (4) comporte au moins deux galets de roulement (6) qui peuvent tourner autour d'un axe de rotation commun (8), dans lequel le châssis respectif (4), vu dans le sens de la marche (X), présente un élément de liaison avant (12) sur sa face avant (10) et un élément de liaison arrière (16) sur sa face arrière (14), et dans lequel l'élément de liaison avant (12) et l'élément de liaison arrière (16) sont conçus pour la liaison articulée d'une tige d'accouplement (18) reliant deux des remorques de transport (2) l'une à l'autre,
**caractérisé en ce que**
la distance (L1) d'un point d'articulation (20) défini par l'élément de liaison avant (12) d'un centre axial de l'axe de rotation (8) correspond sensiblement à la distance (L2) d'un point d'articulation (22) défini par l'élément de liaison arrière (16) du centre axial de l'axe de rotation (8), la tige d'accouplement (18) étant montée à rotation dans un plan horizontal dans les points d'articulation (20, 22) des éléments de liaison (12, 16), dans lequel les remorques de transport (2) reliées entre elles par la tige d'accouplement (18) sont en outre reliées entre elles par une barre d'articulation (24) et dans lequel la barre d'articulation (24) est montée sur des éléments de liaison supplémentaires (26, 28) disposés sur les châssis (4) couplés par la tige d'accouplement (18) de telle sorte que la barre d'articulation (24) est montée de manière à pouvoir tourner dans un plan horizontal et s'étend en oblique par rapport à l'axe central longitudinal de la tige d'accouplement (18).

2. Raccordement de remorque de transport selon la revendication 1, **caractérisé en ce que** les éléments de liaison supplémentaires sont conçus comme des bras articulés rigides (26, 28), l'un (26) des bras articulés rigides faisant saillie par rapport à l'élément de liaison avant (16) et un autre (28) des bras articulés rigides (28) fait saillie par rapport à l'élément de liaison arrière (12).

3. Raccordement de remorque de transport selon la revendication 1 ou 2, **caractérisé en ce que** la barre d'articulation (24) définit une ouverture de passage allongée (30) à travers laquelle s'étend la tige d'accouplement (18).

4. Raccordement de remorque de transport selon l'une quelconque des revendications 1 à 3, **caractérisé en ce que** la barre d'articulation (24) présente deux barrettes (34) s'étendant parallèlement l'une à l'autre, qui sont reliées entre elles par deux barrettes transversales (32).

5. Raccordement de remorque de transport selon l'une des revendications 1 à 4, **caractérisé en ce que** la tige d'accouplement (18) est plus longue que la barre d'articulation (24).

6. Raccordement de remorque de transport selon l'une des revendications 1 à 5, **caractérisé en ce que** les éléments de liaison (12, 16) et/ou les éléments de liaison supplémentaires (26, 28) sont fixés aux remorques de transport (2) accouplées les unes aux autres au moyen de profilés métalliques (36) et de boulons filetés (38).

7. Raccordement de remorque de transport selon l'une des revendications 1 à 6, **caractérisée en ce qu'**elle est mobile dans les deux sens.

8. Raccordement de remorque de transport selon l'une des revendications 1 à 7, **caractérisée en ce qu'**au moins une des remorques de transport (2) présente, outre les galets de roulement (6), des galets de guidage (40) qui, avec les galets de roulement (6), sont disposés à la manière d'un châssis en diamant ou à 6 roues.

9. Raccordement de remorque de transport selon l'une quelconque des revendications 1 à 8, **caractérisé en ce que** la tige d'accouplement (18) et/ou la barre d'articulation (24) est/sont reliée(s) aux éléments de liaison (12, 16, 26, 28) qui leur sont associés au moyen de boulons d'attelage (44).

10. Raccordement de remorque de transport selon l'une des revendications 1 à 8, **caractérisé en ce que** la tige d'accouplement (18) et/ou la barre d'articulation (24) est/sont reliée(s) aux éléments de liaison (12, 16, 26, 28) qui leur sont associés au moyen de boulons filetés (42).

11. Raccordement de remorque de transport selon l'une quelconque des revendications 1 à 10, **caractérisé en ce que** la tige d'accouplement (18) et la barre d'articulation (24) peuvent être repliées sensiblement horizontalement ou verticalement vers la remorque de transport respective (2) dans un état désaccouplé d'un côté et peuvent être fixées de préférence contre un rabattement involontaire au moyen d'un ou plusieurs éléments de fixation montés sur la remorque de transport (2).

12. Train de remorques de transport avec au moins deux raccordements de remorques de transport, le raccordement de remorque de transport respectif étant conçu selon l'une des revendications 1 à 11, **caractérisé en ce que** les raccordements de remorques de transport sont reliés entre eux par un timon et un attelage de remorque ou par une tige d'accouplement (18) et deux attelages de remorque ou par deux demi-timons.
